# EUROPÄISCHE PATENTSCHRIFT

(11) **EP 0 353 545 B1**
(45) Veröffentlichungstag und Bekanntmachung des Hinweises auf die Patenterteilung: **04.05.1994**
(21) Anmeldenummer: 89113284.7
(22) Anmeldetag: 19.07.1989
(51) Int. Cl.: G21C 19/02, B66C 1/12, B66C 1/66

(54) **Vorrichtung zum Transportieren und Wenden von Kerngerüstteilen eines Kernreaktors**
Transport and turning device for the core components of a nuclear reactor
Dispositif pour transporter et tourner les composants du coeur d'un réacteur nucléaire

(30) Priorität: 03.08.1988 DE 3826401
(43) Veröffentlichungstag der Anmeldung: 07.02.1990
(73) Patentinhaber: SIEMENS AKTIENGESELLSCHAFT, 80333 München (DE)
(72) Erfinder: Schramm, Herbert, Dipl.-Ing. (FH), D-8552 Höchstadt (DE); Landrock, Gerhard, D-8523 Baiersdorf (DE); Tautz, Jürgen, D-8551 Hemhofen (DE)

(56) Entgegenhaltungen:
- FR-A- 2 585 870
- US-A- 3 253 851
- ATOMKERNENERGIE-KERNTECHNIK, Band 47, Nr. 1, Juli 1985, Seiten 37-39, München, DE; H. KNAAB et al.: "Reconstitution of light-water-reactor fuel assemblies"

## Beschreibung

Die Erfindung betrifft eine Vorrichtung zum Transportieren und Wenden von Kerngerüstteilen eines Kernreaktors. Eine solche Vorrichtung wird z.B. zur Durchführung von Reparaturen oder Inspektionen an der Unterseite des oberen Kerngerüstes eines Druckwasserkernreaktors benötigt, damit die an der Unterseite des Kerngerüstes liegende Gitterplatte zugänglich wird. Aus Gründen des Strahlenschutzes muß dieser Drehvorgang unter Wasser mit einer ausreichenden Wasserüberdeckung im Abstell- oder Reaktorbecken des Reaktorgebäudes durchgeführt werden. Dabei ist zu berücksichtigen, daß das obere Kerngerüst eine komplizierte Struktur hat, an deren Maßhaltigkeit sowohl sicherheitstechnisch als auch geometrisch hohe Anforderungen gestellt werden. Das Gesamtgewicht beträgt einschließlich der Steuerstabführungseinsätze zwischen 35 und 45 Tonnen. Die Abmessungen liegen bei 4 bis 5 m Durchmesser und 3 bis 4 m Höhe.

Die erfindungsgemäße Vorrichtung ist so aufgebaut, daß ein biege- und torsionsfester Korb zur Aufnahme des Kerngerüstteiles an einer darüberliegenden Traverse um eine horizontale Achse schwenkbar gelagert ist,
daß die Lagerung zwei starre Laschen umfaßt, die sich von gegenüberliegenden Seiten des Korbes zu der Traverse erstrecken
daß an dem Korb auf gegenüberliegenden Seiten rechtwinklig zu der Achse verlaufende Scheiben angebracht sind, von denen flexible Zugglieder zu je einem an der Traverse sitzenden Stellantrieb und zu einer an dieser verstellbar angebrachten Umlenkrolle führen, und
daß die Zugglieder gegenüber der Lagerung des Korbes unter Vorspannung stehen.

Mit der erfindungsgemäßen Vorrichtung ist dafür gesorgt, daß das obere Kerngerüst oder ähnliche Bauteile beim Drehvorgang keine unzulässigen Belastungen erfahren oder Verlagerungen oder Verformungen erleiden. Das gesamte System bleibt bei allen Schwerpunktlagen stabil, weil durch das vorgespannte geschlossene System der Zugglieder geringfügige Drehmomente, die durch eine ungenaue Erfassung des Schwerpunktes entstehen können, ausgeglichen bzw. aufgefangen werden. Mit den Laschen wird das Gewicht des Kernbauteiles und des Korbes abgefangen. Somit ist im hängenden Zustand eine stabile Lage gesichert, bei der der biege- und torsionsfeste Korb alle Belastungen aufnimmt.

Es ist günstig, wenn die Laschen Ausnehmungen aufweisen, die über an dem Korb sitzende Achsstummel greifen. Damit läßt sich durch eine einfache, kurze Seitenbewegung das Anschlagen des Korbes an der Traverse erreichen. Vorteilhaft sind die Laschen zu diesem Zweck an der Traverse schwenkbar befestigt.

Die Zugglieder können in Form geschlossener Seilsschlaufen ausgebildet sein, die jeweils an der Scheibe und an dem Stellantrieb befestigt sind. Mit diesen geschlossenen Seilschlaufen wird die Vorspannung aufgebracht. Vorteilhaft ist zu diesem Zweck die Umlenkrolle verstellbar angeordnet, z.B. mit einer Spindel, mit der die vertikale Lage der Achse der Umlenkrolle verändert wird.

Der Stellantrieb dient zum Schwenken des Korbes mit Hilfe der daran befestigten Scheiben. Er umfaßt vorteilhaft einen hydraulisch betätigten Kolben mit einer Kolbenstange, über die die Seilschlaufe geführt ist. Dies geschieht zweckmäßig in der Weise, daß die Kolbenstange eine Längsbohrung aufweist, durch die die Seilschlaufe verläuft, so daß ein geschlossenes Kraftsystem mit einer definierten Lage geschaffen wird.

Es empfiehlt sich, die Zugglieder mit Dehnungsmeßstreifen zur Kontrolle der Vorspannung sowie der Kräfte während des Wendevorgangs zu versehen. Mit solchen Dehnungsmeßstreifen kann auch der Wendevorgang selbst überwacht werden, wie später noch näher erläutert wird.

Der Korb kann aus zwei Profilstahlringen und mehreren, diese verbindenden Trägern bestehen, weil dann bei relativ geringem Gewicht die notwendige Biege- und Torsionsfestigkeit zu erreichen ist. Im Hinblick auf den Transport kann es vorteilhaft sein, wenn der Korb aus zwei miteinander verschraubbaren Segmenten besteht. Ferner kann der Korb mehrere fernbedient montier- und demontierbare Füße und Gitterplattenabstützungen aufweisen, die im gewendeten Zustand demontiert werden und dadurch Zugang zu den im Korb vorhandenen Kerngerüstteilen erleichtern.

Im Bereich der Kuppelstelle der Zugglieder mit den Stellantrieben ist die Traverse vorteilhaft begehbar ausgebildet. Dies erleichtert die Montage, insbesondere das Anschlagen der Zugglieder und eine gegebenenfalls notwendige Justierung.

Zur näheren Erläuterung der Erfindung wird anhand der Zeichnung ein Ausführungsbeispiel beschrieben. Dabei zeigt
FIG 1 eine Wendevorrichtung für das obere Kerngerüst eines Druckwasserreaktors in einer perspektivischen Darstellung,
FIG 2 in einer Seitenansicht den Wendekorb mit den Zuggliedern und den Einrichtungen zur Erzielung einer Vorspannung.
FIG 3 die seitliche Fixierung des Kerngerüsts im Wendekorb mit Hilfe von Keilen an einem Ende des Wendekorbes und
FIG 4 eine seitliche Fixierung am anderen Ende des Kerngerüsts mit einem Winkelhebel, ebenfalls in einem Ausschnitt.

Die erfindungsgemäße Vorrichtung umfaßt als wesentliche Teile die Traverse 1 und den darunter unter dem Wasserspiegel 2 liegenden Wendekorb 3. Der Wendekorb 3 hängt an zwei starren Hebelaschen 4, die auf gegenüberliegenden Seiten des Wendekorbes 3 mit Ausnehmungen 5 über Achsstummel 6 greifen. Die Hebelaschen 4 haben eine Länge von ca. 8 m. Sie sind mit jeweils zwei Abspannseilen 7 und 8 festgelegt, die zu Abspannlagern 10 auf beiden Seiten der Traverse 1 führen.

Der Wendekorb 3 besteht aus zwei parallelen kreisförmigen Profilstahlringen 12 und 13, die an mindestens vier Stellen ihres Umfanges durch dazwischenliegende Stützen 14 verbunden sind. Die beiden Ringe 12 und 13 sind geteilt, so daß zwei Ringsegmente entstehen, die leichter zu transportieren sind. Außerdem trägt der untere Ring 13 vier Füße 16 und vier Gitterplattenabstützungen 20, die paarweise im Bereich zweiergegenüberliegender Füße 16 angeordnet sind.

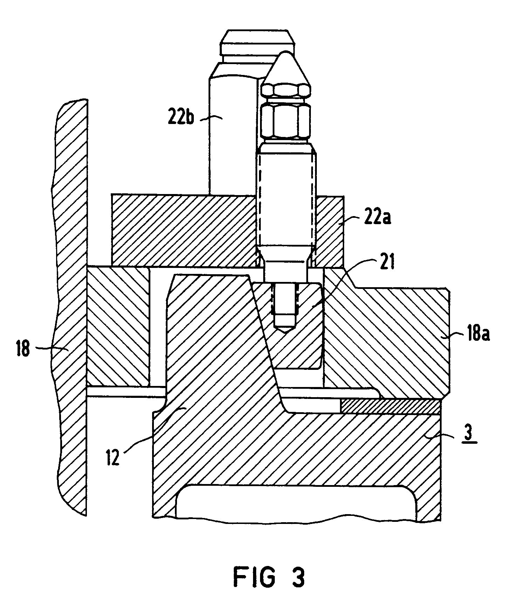

Im Inneren des Wendekorbes 3 sitzt das obere Kerngerüst, das als Ganzes mit 18 bezeichnet ist. Es ist in dem Korb 3 mit Zentrierstäben 19 geführt. Sein Flansch 18a ist, wie FIG 3 zeigt, gegenüber dem Ring 12 durch einen einstellbaren Keil 21 in seitlicher Richtung formschlüssig festgelegt. Dies gilt für die beiden rechtwinklig zur Wendeachse gelegenen Befestigungsstellen. An diesen und den beiden anderen Befestigungsstellen ist der Flansch 18a mit Deckplatten 22a und Schrauben 22b festgeklemmt.

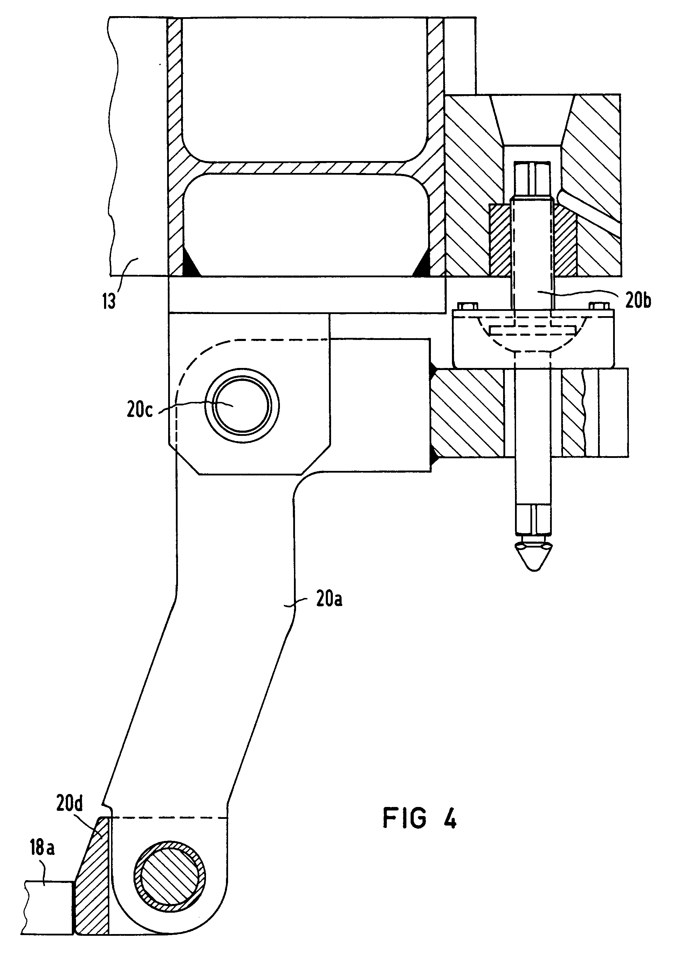

An dem anderen Ring 13 sind die vier Gitterplattenabstützungen 20 rechtwinklig zur Drehachse angebracht. Die FIG 4 zeigt, daß die Abstützungen 20 einen Winkelhebel 20a umfassen, der mit einer Schraube 20b um eine Achse 20c geschwenkt werden kann. Mit der Schwenkung wird erreicht, daß sich ein am freien Ende des Winkelhebels 20a einstellbar gelagertes Druckstück 20d formschlüssig gegen die Außenseite der Gitterplatte 18a legt.

Im Bereich der Achsstummel 6 sind am Wendekorb 3 auf gegenüberliegenden Seiten Wendescheiben 24 fest angebracht. Von diesen gehen Zugmittel in Form von Stahlseilen 25 aus, die von den Scheiben 24 nach oben zu der Traverse 1 führen. Dort sind zwei gleiche Umlenk- und Seilspannvorrichtungen 26 angebracht, die später näher erläutert werden.

An der Unterseite der Traverse 1 sitzen zwei Podeste 28, die über Leitern 29 von der Oberseite der Traverse her zugänglich sind. Von den Podesten 28 aus können die Stahlseile 25 im Bereich ihrer Kuppelstellen mit der Umlenk- und Seilspannvorrichtung 26 montiert werden. Zwischen den Vorrichtungen 26 ist in der Mitte der Traverse 1 eine Anhängung 30 angebracht, in die der Kranhaken 31 des in einem Kernkraftwerk vorhandenen Rundlaufkranes greifen kann. Somit ist die Vorrichtung insgesamt symmetrisch aufgebaut.

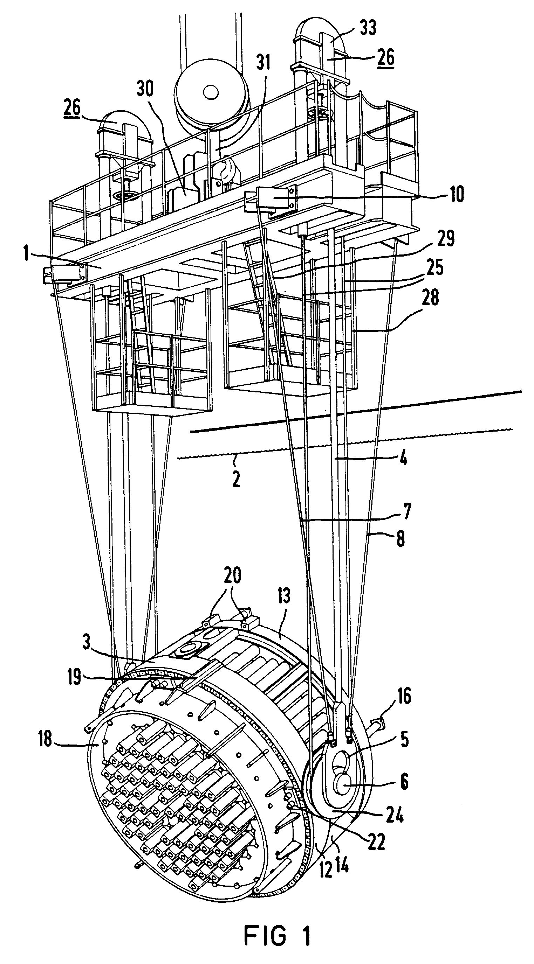

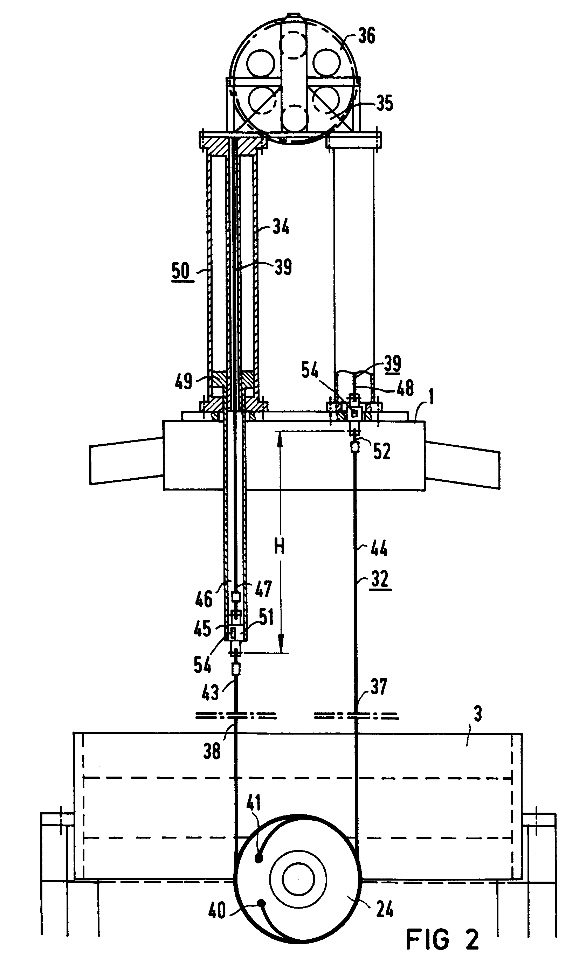

Die FIG 2 zeigt die Umlenk- und Seilspannvorrichtungen 26 nach der Abnahme der in FIG 1 dargestellten Abdeckhaube 33. Man erkennt, daß auf der Traverse 1 über zwei hohlzylindrische Stützen 34 ein Lagerbock 35 für eine Umlenkrolle 36 befestigt ist. Über die Umlenkrolle 36 verläuft das obere Ende einer Seilschlaufe 32, die aus drei Teilen 37, 38 und 39 besteht. Die beiden Teile 37, 38 sind jeweils mit einem Ende an der Wendescheibe 24 angebracht, und zwar ist das Seilende 37 bei 40 und das Seilende 38 bei 41 befestigt. Das freie Ende 43 des Abschnittes 38 ist an der Unterseite einer Kolbenstange 45 befestigt. Die Kolbenstange 45 ist hohl ausgeführt, wie die FIG 2 zeigt.

Das dritte Seilstück 39 ist im Inneren 46 der Kolbenstange 45 mit seinem Ende 47 befestigt und über die Umlenkrolle 36 geführt. Das andere Ende 48 ist mit dem Ende 44 des Seiles 37 gekuppelt, so daß die Seilschlaufe 32 geschlossen ist.

Die Kolbenstange 45 führt zu dem Hydraulikkolben 49 eines Stellantriebes 50, für den das Rohr 34 den zugehörigen Zylinder bildet. Damit kann das Seilstück 37 durch Ausfahren des Kolbens 49 und das Seilstück 38 durch Einfahren des Kolbens 49 hydraulisch um den in der FIG 2 dargestellten Hub H von ca. 1,65 m verstellt werden. Mit dieser Bewegung werden die Scheiben 24 auf beiden Seiten des Wendekorbes 3 gedreht, so daß eine Schwenkung um 180° erfolgen kann.

Mit der erfindungsgemäßen Vorrichtung wird folgendermaßen gearbeitet:
Das obere Kerngerüst 18 wird in den biege- und torsionssteifen Korb 3 eingesetzt, verschraubt und abgestützt. Ungefähr im Gesamtschwerpunkt von oberem Kerngerüst 18 und Wendekorb 3 sind an diesem an zwei gegenüberliegenden Punkten die zwei Wendescheiben 24 sowie die zwei kurzen Achsstummel 6 angebracht, über die die gesamte Einheit drehbar gelagert ist.

Die an den Scheiben 24 formschlüssig befestigte Seilschlaufe 32 wird
a) durch Einfahren der Kolbenstange 45 des Hydraulikzylinders 34 und
b) durch eine Vertikalbewegung der Umlenkrolle 36 entsprechend vorgespannt.

Zur Kontrolle der Vorspannung, sowie der aus dem Drehvorgang resultierenden Seilkräfte sind die Verbindungselemente 51 und 52 der Seile 37, 38, 39 mit Dehnungsmeßstreifen 54 bestückt. Mit nicht dargestellten digitalen Dehnungsmeßgeräten und einem angeschlossenen Registriergerät können die Vorspannkräfte angezeigt sowie die Seilkräfte beim Wendevorgang kontinuierlich aufgezeichnet und überwacht werden. Damit sind Rückschlüsse auf die Außenmittigkeit des Schwerpunktes, die Reibkräfte in den Drehachsen 5, 6 sowie auf die Sicherheit gegen die rechnerische Bruchkraft der Wendeseile 37, 38, 39 möglich.

Durch weiteres Ein- oder Ausfahren der Kolbenstange 45 wird die Drehbewegung der Einheit ausgeführt. Liegt dabei die Situation vor, daß Drehachse 6 und Schwerpunktlage nicht identisch sind, so kann dies lediglich dazu führen, daß ein Seil 37 zusätzlich zur Vorspannung belastet, das andere Seil 38 entlastet wird; das gesamte System bleibt jedoch bei entsprechend gewählter Vorspannung stabil.

Der zulässige Abstand des Schwerpunktes zur Drehachse 6 kann durch entsprechende Wahl des Durchmessers der Scheiben 24, des Durchmessers der Seile 37, 38, 39 sowie durch die Auslegung des Stellantriebes 50 vorgegeben werden.

Weil die Reaktionskraft der zum Drehen notwendigen Linearkraft des Zylinders 34 die Traverse 1 schief stellen würde und dies vor allem bei ausgefahrener Kolbenstange 45 zu unerwünschten Querkräften auf die Kolbenstange 45 führen würde, sind entsprechend vorgespannte Abspannseile 7, 8 zwischen Drehlager 5, 6 und Traverse 1 angeordnet. Sie verhindern diese Schiefstellung.

## Patentansprüche

1. Vorrichtung zum Transportieren und Wenden von Kerngerüstteilen eines Kernreaktors, **dadurch gekennzeichnet,**
a) daß ein biege- und torsionsfester Korb (3) zur Aufnahme des Kerngerüstteiles (18) an einer darüberliegenden Traverse (1) um eine horizontale Achse (6) schwenkbar gelagert ist,
b) daß die Lagerung zwei starre Laschen (4) umfaßt, die sich von gegenüberliegenden Seiten des Korbes (3) zu der Traverse (1) erstrecken,
c) daß an dem Korb (3) auf gegenüberliegenden Seiten rechtwinklig zu der Achse (6) verlaufende Scheiben (24) angebracht sind, von denen flexible Zugglieder (37,38,39) zu je einem an der Traverse (1) sitzenden Stellantrieb (50) und zu einer an dieser verstellbar angebrachten Umlenkrolle (36) führen, und
d) daß die Zugglieder (37,38,39) gegenüber der Lagerung des Korbes unter Vorspannung stehen.

2. Vorrichtung nach Anspruch 1, **dadurch gekennzeichnet,** daß die Laschen (4) mit Seilen (7,8) seitlich abgespannt sind.

3. Vorrichtung nach Anspruch 1 oder 2, **dadurch gekennzeichnet,** daß die Laschen (4) Ausnehmungen (5) aufweisen, die über an dem Korb (3) sitzende Achsstummel (6) greifen.

4. Vorrichtung nach Anspruch 1, 2 oder 3, **dadurch gekennzeichnet,** daß die Laschen (4) an der Traverse (1) schwenkbar befestigt sind.

5. Vorrichtung nach einem der Ansprüche 1 bis 4, **dadurch gekennzeichnet,** daß die Zugglieder (37,38,39) in Form geschlossener Seilschlaufen (32) ausgebildet sind, die jeweils an der Scheibe (24) und an dem Stellantrieb (50) befestigt sind.

6. Vorrichtung nach Anspruch 5, **dadurch gekennzeichnet,** daß der Stellantrieb (50) einen hydraulisch betätigten Kolben (49) mit einer Kolbenstange (45) umfaßt und daß die Seilschlaufe (32) über die Kolbenstange (45) geführt ist.

7. Vorrichtung nach Anspruch 6, **dadurch gekennzeichnet,** daß die Kolbenstange (45) eine Längsbohrung (46) aufweist, durch die die Seilschlaufe (32) verläuft.

8. Vorrichtung nach einem der Ansprüche 1 bis 7, **dadurch gekennzeichnet,** daß die Umlenkrolle (36) vertikal verstellbar angeordnet ist.

9. Vorrichtung nach einem der Ansprüche 1 bis 8, **dadurch gekennzeichnet,** daß die Zugglieder (37,38,39) mit Dehnungsmeßstreifen (54) zur Kontrolle der Vorspannung versehen sind.

10. Vorrichtung nach einem der Ansprüche 1 bis 9, **dadurch gekennzeichnet,** daß der Korb (3) aus zwei Profilstahl-Ringen (12,13) und mehreren, diese verbindenden Trägern (14) besteht.

11. Vorrichtung nach Anspruch 10, **dadurch gekennzeichnet,** daß der Korb (3) aus zwei miteinander verschraubbaren Segmenten besteht.

12. Vorrichtung nach Anspruch 10 oder 11, **dadurch gekennzeichnet,** daß der Korb (3) mehrere fernbedient montierbare Füße (16) aufweist.

13. Vorrichtung nach einem der Ansprüche 1 bis 12, **dadurch gekennzeichnet,** daß die Traverse (1) im Bereich der Kuppelstelle (51) der Zugglieder (37,38,39) mit den Stellantrieben (50) begehbar ausgebildet ist.

14. Vorrichtung nach einem der Ansprüche 1 bis 13, **dadurch gekennzeichnet,** daß zwischen Kerngerüstteilen (18) und dem Wendekorb (3) Keile 21 zur seitlichen formschlüssigen Festlegung verstellbar angeordnet sind.

15. Vorrichtung nach einem der Ansprüche 1 bis 14, **dadurch gekennzeichnet,** daß Kerngerüstteile (18) von dem Wendekorb (3) mit verstellbaren Hebeln (20a) in seitlicher Richtung formschlüssig erfaßt werden.

16. Vorrichtung nach Anspruch 15, **dadurch gekennzeichnet,** daß an dem den Kerngerüstteilen (18) zugekehrten Ende der Hebel (20a) einstellbare Druckstücke (20d) vorgesehen sind.

## Claims

1. Device for transporting and turning core structure parts of a nuclear reactor, characterized in that
a) a bend-resistant and torsion-resistant cage (3) for accommodating the core structure part (18) is rotatably mounted about a horizontal axis (6) on a bar (1) lying above the core structure part,
b) the support comprises two rigid brackets (4) which extend from opposite sides of the cage (3) to the bar (1),
c) pulleys (24) extending at right angles to the axis (6) are fitted to the cage (3) on opposite sides, from which pulleys flexible tension members (37, 38, 39) lead in each case to an actuator (50) disposed on the bar (1) and to a guide roller (36) fitted in an adjustable manner thereto, and
d) the tension members (37, 38, 39) are under initial stress relative to the cage support.

2. Device according to claim 1, characterized in that the brackets (4) are laterally braced with cables (7, 8).

3. Device according to claim 1 or 2, characterized in that the brackets (4) have recesses (5) which engage over axle journals (6) disposed on the cage (3).

4. Device according to claim 1, 2 or 3, characterized in that the brackets (4) are rotatably fastened to the bar (1).

5. Device according to one of claims 1 to 4, characterized in that the tension members (37, 38, 39) are constructed in the form of closed cable loops (32) which are in each case fastened to the pulley (24) and to the actuator (50).

6. Device according to claim 5, characterized in that the actuator (50) comprises a hydraulically actuated piston (49) with a piston rod (45) and in that the cable loop (32) is guided by way of the piston rod (45).

7. Device according to claim 6, characterized in that the piston rod (45) has a longitudinal bore (46) through which the cable loop (32) extends.

8. Device according to one of claims 1 to 7, characterized in that the guide roller (36) is arranged such that it can be adjusted vertically.

9. Device according to one of claims 1 to 8, characterized in that the tension members (37, 38, 39) are provided with strain gauges (54) to control the initial stress.

10. Device according to one of claims 1 to 9, characterized in that the cage (3) consists of two sectional-steel rings (12, 13) and several supports (14) connecting them.

11. Device according to claim 10, characterized in that the cage (3) consists of two segments which can be screwed together.

12. Device according to claim 10 or 11, characterized in that the cage (3) has several feet (16) which can be attached by remote control.

13. Device according to one of claims 1 to 12, characterized in that the bar (1) is constructed such that it is accessible in the region of the coupling point (51) of the tension members (37, 38, 39) with the actuators (50).

14. Device according to one of claims 1 to 13, characterized in that wedges 21 for lateral form-locking fixing are adjustably arranged between the core structure parts (18) and the turning cage (3).

15. Device according to one of claims 1 to 14, characterized in that the core structure parts (18) are grasped in a form-locking manner in the lateral direction by the turning cage (3) by means of adjustable levers (20a).

16. Device according to claim 15, characterized in that adjustable pressure pieces (20d) are provided at the end of the levers (20a) facing the core structure parts (18).

## Revendications

1. Dispositif destiné à transporter et à retourner des pièces de carcasse du coeur d'un réacteur nucléaire, caractérisé en ce que,
a) un panier (3) résistant à la flexion et à la torsion, destiné à recevoir la pièce de carcasse (18) du coeur, est monté sur une traverse (1) située au-dessus de celle-ci de façon à pouvoir basculer par rapport à un axe (6) horizontal,
b) le palier comprend des attaches (4) rigides qui s'étendent depuis des côtés opposés du panier (3) jusqu'à la traverse (1),
c) des disques (24) qui s'étendent sur des côtés opposés du panier (3) à angle droit avec l'axe (6) et à partir desquels des organes de traction souples (37, 38, 39) se dirigent chacun jusqu'à un dispositif d'entraînement de changement de position (50) fixé à la traverse (1) et à un galet de renvoi (36) monté mobile sur celle-ci,
d) et que les organes de traction (37, 38, 39) sont mis sous précontrainte par rapport au palier du panier.

2. Dispositif selon la revendication 1, caractérisé en ce que les attaches (4) sont haubanées latéralement au moyen de câbles (7, 8).

3. Dispositif selon la revendication 1 ou 2, caractérisé en ce que les attaches (4) présentent des évidements (5) qui sont accrochés sur des bouts d'axe (6) fixés sur le panier (3).

4. Dispositif selon la revendication 1, 2 ou 3, caractérisé en ce que les attaches (4) sont fixées de façon pivotante à la traverse (1).

5. Dispositif selon l'une des revendications 1 à 4, caractérisé en ce que les organes de traction (37, 38, 39) sont conformés en boucles (32) de câble fermées qui sont fixées chacune au disque (24) et au dispositif d'entraînement (50) de changement de position.

6. Dispositif selon la revendication 5, caractérisé en ce que le dispositif d'entraînement (50) de changement de position comprend un vérin (49) hydraulique, comportant une tige de piston (45) et que la boucle (32) de câble est guidée par la tige de piston (45).

7. Dispositif selon la revendication 6, caractérisé en ce que la tige de piston (45) présente un alésage longitudinal (46) dans lequel passe la boucle (32) de câble.

8. Dispositif selon l'une des revendications 1 à 7, caractérisé en ce que le galet de renvoi (36) est monté mobile verticalement.

9. Dispositif selon l'une des revendications 1 à 8, caractérisé en ce que les organes de traction (37, 38, 39) sont munis de jauges de contrainte (54) destinées à contrôler la précontrainte.

10. Dispsositif selon l'une des revendications 1 à 9, caractérisé en ce que le panier (3) est constitué de deux anneaux (12, 13) en profilé d'acier et de plusieurs poutres (14) les reliant.

11. Dispositif selon la revendication 10, caractérisé en ce que le panier (3) est constitué de deux segments susceptibles d'être vissés l'un à l'autre.

12. Dispositif selon la revendication 10 ou 11, caractérisé en ce que le panier (3) comporte plusieurs pieds (16) susceptibles d'être montés par télécommande.

13. Dispositif selon l'une des revendications 1 à 12, caractérisé en ce que la traverse (1) est conformée de façon à pouvoir être déplacée au moyen des dispositifs d'entraînement (50) de changement de position, dans la zone de l'emplacement (51) d'accouplement des organes de traction (37, 38, 39).

14. Dispositif selon l'une des revendications 1 à 13, caractérisé en ce qu'entre les pièces (18) de carcasse de coeur et le panier de retournement (3) des coins (21) sont montés de façon à pouvoir être déplacés en vue du calage latéral par complémentarité de formes.

15. Dispositif selon l'une des revendications 1 à 4, caractérisé en ce que les pièces (18) de carcasse du coeur sont saisies par le panier de retournement (3) au moyen de leviers (20a) réglables, avec complémentarité de formes dans la direction latérale.

16. Dispositif selon la revendication 5, caractérisé en ce que des pièces de poussée (20d) réglables sont prévues à l'extrémité des leviers (20a), qui est tournée vers les pièces (18) de carcasse de coeur.
